# EUROPEAN PATENT APPLICATION

(11) **EP 2 074 917 A1**
(43) Date of publication of application: **01.07.2009**
(21) Application number: 08021210.3
(22) Date of filing: 05.12.2008
(51) Int. Cl.: A47J 41/00, A47J 41/02, A47J 31/44

(54) **Coffee machine**

(30) Priority: 28.12.2007 JP 2007341448
(71) Applicant: Sataco Co., LTD., Tokyo (JP)
(72) Inventor: Aonuma, Saburo, Tokyo (JP)
(74) Representative: Emde, Eric

(57) **Abstract**

[Object]
To enhance an effect for keeping warm and prevent oxidation deterioration of coffee, serving delicious coffee, and to save energy, suppressing generation of carbon dioxide.

[Constitute]
A coffee machine 100 for spraying hot water over powder of coffee beans to extract coffee, in which a coffee machine body 10 includes a nitrogen gas generation unit 30 for generating nitrogen gas, and a nitrogen gas supplying part 31 for supplying the nitrogen gas generated by the nitrogen gas generation unit 30 into a pot 60, and the pot 60 included a pot body 61 made of heat insulating material, a cover part 62 for sealing up the pot body 61 and a heater 72 provided in at least one of the pot body 61 and the cover part 62, for heating at least the pot body 61.

## Description

This application is based on the priority document of Japanese Patent Application No. 2007-341448 filed on December 28, 2007 and claims the benefits of the priority thereof. The entire contents of the priority document are incorporated herein by referring to the priority document.

### BACKGROUND OF THE INVENTION

### Field of the Invention

The present invention relates to a coffee machine for extracting coffee and maintaining the quality and freshness of the extracted coffee.

### Description of the Related Art

Conventionally, an effort has been made to maintain the quality and freshness of extracted coffee. Assuming that coffee beans have a high quality, in order to maintain the quality and freshness of coffee, the following items then have been said to be important.
1. Heat only at roasting and extracting coffee to prevent heat deterioration of the coffee.
2. Keep the coffee in a state of non-contact with the air after extraction of the coffee to prevent it from oxidation deterioration.
3. Serve for drinking as early as possible after the extraction without reheat.

When a store serves coffee, the coffee after 30 minutes elapsed from extraction is rejected and not sold from the viewpoint of guaranteeing the quality of the coffee. For example, if a store works ten hours, 100 cups of coffee may be rejected on an average per day, resulting in much waste. Then, if quality deterioration of coffee caused by oxidation of the coffee due to contact with the air and by heating to keep warm may be prevented, such waste will be eliminated.

JA-2004-283574 discloses a liquid container capable of suppressing oxidation deterioration of a liquid stored, such as coffee, and keeping its suppressive effect continuing when the stored liquid is repetitively discharged by a small amount. This liquid container is made airtight by sealing up a space in an inner container having a heat-retaining property with a cover structure closed. The closed space is brought into an inert gas environment to cut off contact of the stored liquid with the atmosphere. In this liquid container, a pressure of the inert gas that is supplied discharges the stored liquid, when an extraction valve in communication with the inner container is opened.

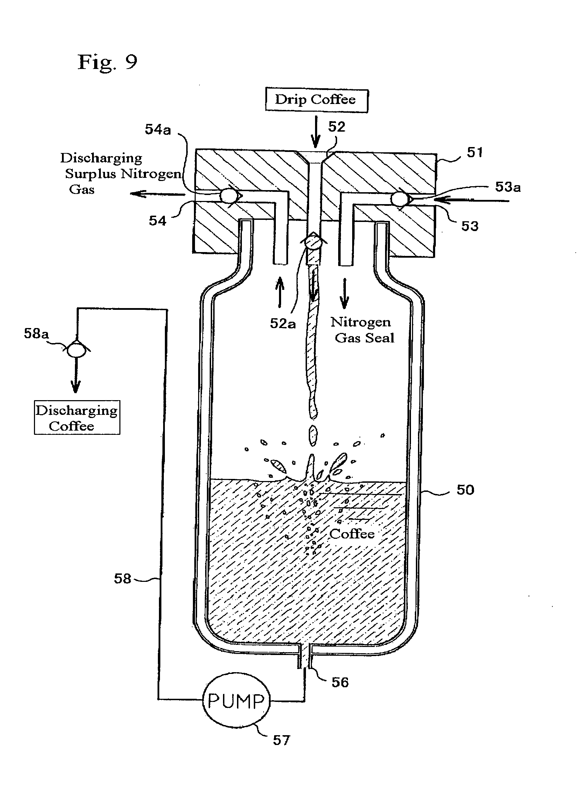

Further, Fig. 9 shows the inside of a conventional coffeepot. The conventional coffeepot includes a pot body 50 having a thermal insulation structure and a cover part 51 for sealing up the pot body 50. In the cover part 51, an introductory part 52 for introducing drip coffee into the pot body 50 and a valve 52a for preventing the coffee introduced through the introductory part 52 from going back are provided. Further, in the cover part 51, a nitrogen gas introductory part 53 is provided for introducing heated nitrogen gas into the pot body 50. In the nitrogen gas introductory part 53, a valve 53a is provided for preventing the nitrogen gas from going back. Further, in the cover part 51, a nitrogen gas discharge part 54 is provided for discharging surplus nitrogen gas in the pot body 50. In the nitrogen gas discharge part 54, a valve 54a is provided that opens upon exceeding a certain pressure, so that the nitrogen gas is discharged outside when a pressure of the nitrogen gas in the pot body 50 exceeds a certain value.

Further, in the bottom of the pot body 50, an outlet port 56 is provided for discharging the stored coffee. The outlet port 56 is connected to a coffee derivation part 58 having a pump 57. To take out the coffee from the pot body 50, activating the pump 57 discharges the coffee outside through the outlet port 56 and the coffee derivation part 58. A valve 58a for preventing the coffee from going back is provided at a tip end of the coffee derivation part 58.
[Patent Document] JA-2004-283574

### SUMMARY OF THE INVENTION

### Problems to be Solved by the Invention

However, in the conventional pot, thermal conduction in the pot body 50 decreases the temperature of the coffee. That is, the pot body 50 has a vacuum area for cutting off the thermal conduction, but the thermal conduction is generated at a joining portion between external metal and internal metal of the pot body 50, even if the vacuum area can cut off the thermal conduction. As the result, heat inside the pot body 50 will escape outside. As described above, in the conventional pot, because the joining portion between the external metal and internal metal of the pot body 50 forms a flow path of heat, the coffee is still in circumstances that the temperature thereof cannot avoid decreasing, even if the vacuum area exists

The temperature of coffee immediately after extraction is about 85°C, and the most suitable temperature for drinking coffee is said to be 75 to 76°C. When the temperature of coffee goes down to about 60 to 70°C, the number of people who feel unsuitable for drinking increases rapidly. Then, when selling coffee for business purposes, the coffee at lowered temperatures of about 60 to 70°C cannot be sold. There is no other choice but to reject the coffee getting cold in such a manner. Then, for selling business of coffee, to suppress an abandonment loss as low as possible, it is very important to take measures for preventing the temperature of the coffee from decreasing.

On the one hand, as shown in Fig. 9, in the conventional pot, the drip coffee will drop down toward the bottom portion of the pot body 50 because the introductory part 52 is provided above the pot body 50. Accordingly, the coffee contacts the air to be oxidized, resulting in oxidation deterioration. Then, when selling coffee for business purposes, the coffee getting oxidized to deteriorate in such a manner cannot be sold and there is no other choice but to reject it. Then, for selling business of coffee, to suppress an abandonment loss as low as possible, it is very important to take measures for preventing the coffee after extraction from contacting the air.

Further, according to techniques disclosed in JA-2004-283574, the inert gas environment provided in the pot prevents the stored liquid from contacting the air. This point serves to prevent the oxidation deterioration of the stored liquid. However, JA-2004-283574 does not describe heating the inert gas, and the case of using the inert gas at room temperature may be envisaged. That is, as described in JA-2004-283574, a pot is filled with inert gas at room temperature, and a pressure of the inert gas discharges a stored liquid, and the inert gas is filled up for each time discharging, and repeating those processes, a decrease in the temperature of the stored liquid will be accelerated. Particularly, when the stored liquid is coffee, such a frequent exchange of the gas causes a decrease in the temperature and further deprives the coffee of an aroma specific to coffee, leading to being unable to serve delicious coffee.

The present invention has been made in the view of the circumstances, and an object thereof is to provide a coffee machine which can enhance an effect for keeping warm, prevent oxidation deterioration of coffee, serve delicious coffee, save energy and suppress generation of carbon dioxide.

### Means for Solving the Problems

1. To achieve the above object, the present invention has taken the following measures. That is, a coffee machine of the present invention includes a coffee machine body for spraying hot water over powder of coffee beans to extract coffee, and a pot for storing the extracted coffee, in which the coffee machine body includes a nitrogen gas generation unit for generating nitrogen gas, and a nitrogen gas supplying part for supplying the nitrogen gas generated by the nitrogen gas generation unit into the pot, and the pot includes a pot body having a vacuum area for cutting off thermal conduction, a cover part for sealing up the pot body, and a heater provided in at least one of the pot body and the cover part, for heating at least the pot body.

The heater heats at least the pot body in such a manner, which can cut off thermal conduction generated by a temperature difference between the inside and outside of the pot body. That is, the pot body has a vacuum structure, and the vacuum structure cuts off the thermal conduction between the outside and inside of the pot body. To form the vacuum structure of the pot body, external metal and internal metal are joined to each other at the uppermost portion of the pot body. The join, for example, is performed by welding. The welding is performed in an extremely accurate manner, and a thickness at the joining point is about 0.1 mm. However, because the metal has a high thermal conductivity, thermal conduction is generated at the small joining point, and heat inside the pot body will escape outside. As described above, the joining portion between the external metal and internal metal forms a flow path of heat, which provides a factor for lowering a temperature of the coffee, even if the pot body has the vacuum area. To block the flow path of heat in the joining portion described above, it is necessary to produce no temperature difference between the external metal and internal metal of the pot body. For the purpose, according to the present invention, the heater for heating at least the pot body is provided in at least one of the pot body and the cover part. Accordingly, the heat of the coffee is not allowed to escape through the joining point. Further, in the present invention, the nitrogen gas is supplied into the pot, and thereby the coffee in the pot can be prevented from contacting the air.

2. Further, in the coffee machine of the present invention, the nitrogen gas supplying part described above includes a heat-absorbing part in which the nitrogen gas absorbs heat from the heater, and a nitrogen gas introductory part for introducing the nitrogen gas having absorbed heat into the pot body.

As described above, the nitrogen gas is introduced into the pot body after the nitrogen gas absorbs heat generated by the heater, thereby eliminating the temperature difference between the nitrogen gas and the coffee stored in the pot body. As the result, the temperature of the coffee can be prevented from lowering due to the thermal conduction.

3. Further, in the coffee machine of the present invention, the heater described above is provided on an outer circumferential surface of a neck portion of the pot body, and the heat-absorbing part described above abuts on the heater on an outer surface of the heater.

As described above, the heater is provided on the outer circumferential surface of the neck portion of the pot body, which allows heating in the vicinity of the joining portion between the external metal and internal metal of the pot body. Accordingly, the temperature difference between the external metal and internal metal is eliminated in the joining portion, allowing the flow path of heat in the joining portion to be cut off. Further, the heat-absorbing part abuts on the heater on the outer circumferential surface of the heater, which allows the nitrogen gas to sufficiently absorb heat from the heater.

4. Further, in the coffee machine of the present invention, the cover part described above includes: an inflow port for introducing the coffee; an outlet port for allowing the coffee having flowed in to flow out into the pot body; and a guide tube whose one end is formed in a shape of circular arc or spiral, while whose the other end is connected to the outlet port, for guiding the coffee having flowed in through the inflow port to the bottom surface in the pot body.

As described above, the guide tube has the lower end thereof formed in a shape of circular arc or spiral and guides the coffee to the bottom surface of the pot body. In the coffee machine, there is a concentration difference in coffee between at the time of starting extraction of the coffee and at the time of finishing the extraction. The coffee at the time of starting the extraction has a high concentration, and the coffee at the time of finishing the extraction has a comparatively low concentration. Then, to equalize the concentration of the coffee, it is necessary to stir the coffee, but stirring simply causes the coffee to contact the air. Then, as the present invention, the lower end of the guide tube formed in a shape of circular arc or spiral allows the coffee to flow in, eddying and swirling in the pot body. The lower end of the guide tube is placed in the vicinity of the bottom surface of the pot body, and the coffee then has a small head drop, and the coffee is supplied at near the bottom of the pot body, so that the uppermost surface of the coffee smoothly moves upwards. Consequently, the area where the coffee in the pot body contacts the atmosphere is only the uppermost surface of the coffee, and accordingly the coffee hardly mixes with the atmosphere. Further, the coffee flows, eddying and swirling in the pot body, and the extracted coffee mixes with the existing coffee, thereby the concentration of the coffee can become uniform.

5. Further, in the coffee machine of the present invention, the cover part further includes an operating device having: a valve plug for closing or opening the outlet port described above; a first spring for applying force toward the outlet port to the valve plug; and a second spring made of shape memory alloy, for applying force toward the inflow port to the valve plug when heated, in which the first spring, on standby, applies force toward the outlet port to the valve plug which force is larger than that of the second spring, while the second spring applies force toward the inflow port to the valve plug which force is larger than that of the first spring when the coffee flows in.

As described above, in the operating device, on standby, the first spring applies force toward the outlet port to the valve plug which force is larger than that of the second spring. Accordingly, the valve plug blocks the outlet port, and thereby undesired air is not permitted to enter the inside of the pot body, and also the nitrogen gas filled up in the pot body is not allowed to flow out. As the result, it becomes possible to isolate the coffee stored in the pot body from contacting the atmosphere. On the one hand, when the coffee flows in, the second spring applies force toward the inflow port to the valve plug which force is larger than that of the first spring. That is, the second spring made of shape memory alloy, upon receiving heat from the coffee, contracts to apply force to the valve plug which force is larger than that of the first spring. Accordingly, the valve plug opens the outlet port, allowing the coffee to flow in the pot body.

6. Further, in the coffee machine of the present invention, the coffee machine body includes a heating vacuum pot for storing hot water used for extracting the coffee, having a heater and a vacuum area for cutting off thermal conduction.

As described above, the coffee machine body includes the heating vacuum pot having the vacuum area for cutting off thermal conduction, and the temperature of the hot water to be supplied to the coffee is not permitted to lower due to thermal conduction, allowing the hot water to be available for extracting the coffee all of the time. Cutting off the thermal conduction makes small a decrease in the temperature of the hot water, and as the result, it becomes possible to make heating frequency low and reduce waste in power consumption as small as possible.

### Advantages of the Invention

According to the present invention, the heater heats at least the pot body, which can cut off the thermal conduction generated by the temperature difference between the outside and inside of the pot body. That is, the pot body has the vacuum structure, and the vacuum structure cuts off the thermal conduction between the outside and inside of the pot body. To form the vacuum structure of the pot body, the external metal and the internal metal are joined to each other at the uppermost portion of the pot body. The join, for example, is performed by welding. The welding is performed in an extremely accurate manner, and a thickness at the joining point is about 0.1 mm. However, because the metal has a high thermal conductivity, thermal conduction is generated at the small joining point, and the heat inside the pot body will escape outside. As described above, the joining portion between the external metal and the internal metal forms a flow path of heat, which provides a factor for lowering the temperature of the coffee, even if the pot body has the vacuum area. To block the flow path of heat in the joining portion described above, it is necessary to produce no temperature difference between the external metal and internal metal of the pot body. For the purpose, in the present invention, the heater for heating at least the pot body is provided in at least one of the pot body and the cover part. Accordingly, the heat of the coffee is not allowed to escape through the joining point. Further, in the present invention, the nitrogen gas is supplied into the pot, and the coffee in the pot can be prevented from contacting the atmosphere.

### Best Mode for Carrying Out the Invention

On the whole, major components of coffee beans include crude fiber by 29%, an extracted component by 29.5%, water by 2.5%, mineral matter by 5%, and further, catechin by 4%, fat by 13%, protein by 14%, and sugar by 1.5%. Then, it has been known that coffee beans include caffeine, and when people drink coffee, the ingested caffeine as a mild stimulating agent affect the central nerve to provide effects such as recovery from fatigue, a thinking-enhancing action and a digestion-improving action. Sugar also turns into caramel by over half upon roasting, thus providing bitterness, sweetness and an aroma.

It has been known that catechin contained in coffee beans forms a bittering component, and, first, bitterness comes out, and sweetness then remains if coffee beans have a high quality. However, when catechin is heated, it resolves to produce pyrogallic acid, providing a factor for degrading a coffee taste. Also, protein clots and precipitates when heated, and coffee becomes turbid and loses its flavor. Then, to serve delicious coffee, it is necessary to avoid reheat after extraction of coffee.

Further, fat contained in coffee beans is closely linked to a coffee aroma, but it gets oxidized in two or three hours because of contact with the air, providing a factor for degrading a coffee taste and aroma. Accordingly, to serve delicious coffee, it is quite important to prevent coffee from contacting the air after extracting the coffee.

The present inventor focused attention on a disadvantage caused by heating the coffee that has been extracted, and a disadvantage generated by contact of the extracted coffee with the air and found that delicious coffee can be served by using the configuration for avoiding these disadvantages in a coffee machine, leading to making the present invention.

That is, in the coffee machine of the present invention, the nitrogen gas generated by the nitrogen gas generation unit is supplied into the pot, and the heater heats the pot body. Further, the nitrogen gas is introduced into the pot body after the nitrogen gas absorbs heat generated by the heater. The coffee having flowed in is guided to the bottom surface in the pot body through the guide tube whose one end is formed in a shape of circular arc or spiral. Also, the cover part of the pot further includes the operating device including: the valve plug for closing or opening the outlet port of the coffee; the first spring for applying force toward the outlet port to the valve plug; and the second spring made of shape memory metal, for applying force toward the inflow port to the valve plug when heated.

By using the configuration described above, the present inventor allows delicious coffee to be served that holds the quality and freshness of coffee having been extracted. Now, an embodiment of the present invention will be hereinafter described with reference to the accompanying drawings.

### BRIEF DESCRIPTION OF THE DRAWINGS

Fig. 1 schematically shows a configuration of a coffee machine according to an embodiment of the present invention;
Fig. 2 shows function of a guide tube;
Fig. 3 shows an enlarged neck portion of a pot body;
Fig. 4 shows an enlarged neck portion of the pot body;
Fig. 5 is a cross-section view of an enlarged cover part of a pot;
Fig. 6 is a cross-section view of an enlarged cover part of the pot;
Fig. 7 shows temperatures measured at multiple places of the pot with time;
Fig. 8 shows temperatures measured at multiple places of the pot with time; and
Fig. 9 shows inner situations of a conventional coffee pot.

### DETAILED DESCRIPTION OF THE PREFERRED EMBODIMENTS

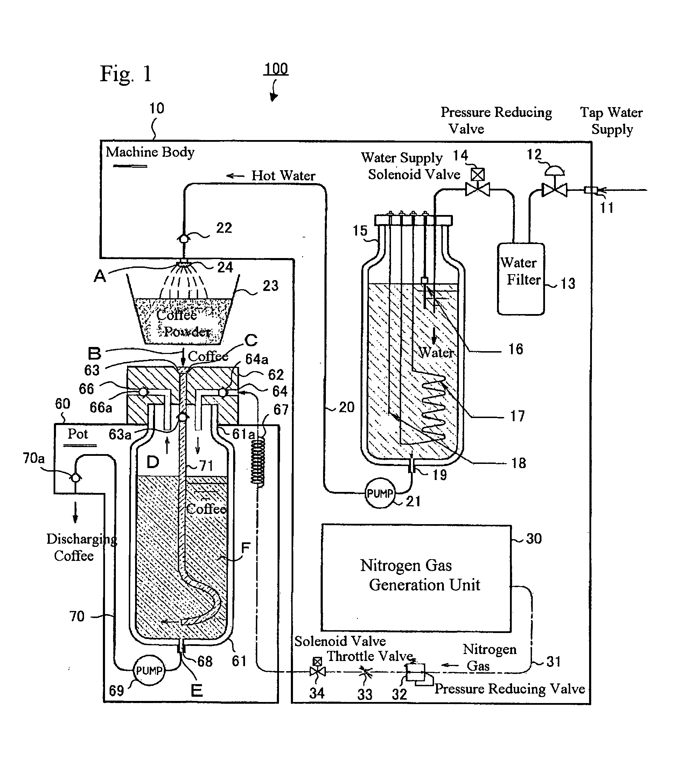

Fig. 1 schematically shows a configuration of a coffee machine according to an embodiment of the present invention. A coffee machine 100 includes a coffee machine body 10 and a pot 60. The coffee machine body 10 takes in tap water from a tap water intake 11, and filters the tap water with a water filter 13 after passing through a pressure reducing valve 12. The water having passed through the filter is introduced into a heating vacuum pot 15 through a water supply solenoid valve 14. The heating vacuum pot 15 includes a level switch 16 for detecting a water level, a heater 17 for heating the water, and a temperature sensor 18 for detecting a water temperature. As described above, the coffee machine body 10 includes the heating vacuum pot 15, so that the temperature of the hot water does not easily lower. As the result, frequency for reheating the hot water can be decreased, saving energy and suppressing generation of carbon dioxide.

Further, in the bottom portion of the heating vacuum pot 15, a hot water outlet part 20 is provided that is connected to an outlet 19 for taking out the hot water. The hot water outlet part 20 has a pump 21 provided therein and can take out the hot water in the heating vacuum pot 15. In the way of the hot water outlet part 20, a check valve 22 for preventing the hot water from going back is provided. In a tip end of the hot water outlet part 20, a shower part 24 is provided and adapted to spray the hot water entirely on coffee powder contained in a coffee dripper 23.

Also, in the coffee machine body 10, a nitrogen gas generation unit 30 for generating nitrogen gas is provided. The nitrogen gas generated by the nitrogen gas generation unit 30 is supplied to the pot 60 by a nitrogen gas supplying part 31 through a pressure reducing valve 32, a throttle valve 33 and a solenoid valve 34. In addition, in the coffee machine body 10, a heater may be provided to heat the nitrogen gas generated by the nitrogen gas generation unit 30.

The pot 60 includes a pot body 61 having a vacuum structure, and a cover part 62 for sealing up the pot body 61. In the cover part 62, a coffee introductory part 63 for introducing drip coffee into the pot body 61, and a valve 63a for preventing the coffee coming in through the coffee introductory part 63 from going back are provided. Further, in the cover part 62, a nitrogen gas introductory part 64 for introducing the nitrogen gas into the pot body 61 is provided. In the nitrogen gas introductory part 64, a valve 64a is provided to prevent the nitrogen gas from going back. Further, in the cover part 62, a nitrogen gas discharging part 66 is provided to discharge surplus nitrogen gas in the pot body 61. In the nitrogen gas discharging part 66, a valve 66a is provided that opens when exceeding a certain pressure, and the nitrogen gas is discharged outside when a pressure of the nitrogen gas in the pot body 61 exceeds a certain value. As described above, the nitrogen gas is supplied into the pot, and accordingly the coffee in the pot is not allowed to contact the air.

In the pot 60, a nitrogen gas heater 67 is provided to heat the nitrogen gas that flows in the nitrogen gas supplying part 31. The nitrogen gas heater 67 may be provided in the coffee machine body 10. As described above, the nitrogen gas heater 67 can sufficiently heat the nitrogen gas generated by the nitrogen gas generation unit 30.

In the bottom portion of the pot body 61, an outlet port 68 is provided to discharge the coffee stored. The outlet port 68 is connected to a coffee derivation part 70 having a pump 69. When the coffee is taken out from the pot body 61, activating the pump 69 discharges the coffee outside through the outlet port 68 and the coffee derivation part 70. In a tip end of the coffee derivation part 70, a valve 70a is provided to prevent the coffee from going back.

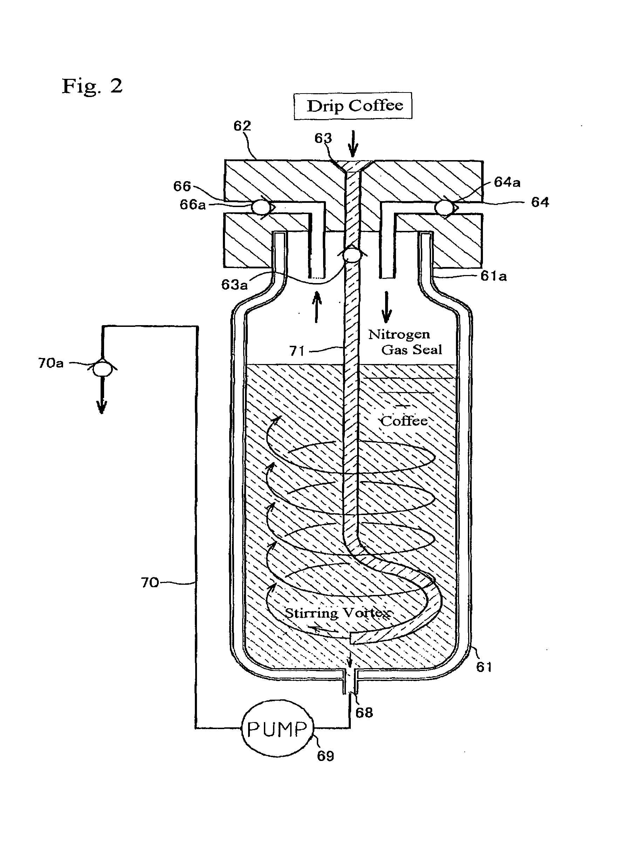

The coffee introductory part 63 in the cover part 62 is connected to a guide tube 71. The guide tube 71 has its lower end formed in a shape of circular arc or spiral and guides the coffee extracted in the coffee machine body 10 to the bottom surface of the pot body 61. Fig. 2 shows function of the guide tube 71. There is a concentration difference of coffee between at the time of starting extraction of the coffee and at the time of finishing the extraction. The coffee at the time of starting the extraction has a high concentration, and the coffee at the time of finishing the extraction has a comparatively low concentration. Then, to equalize the concentration of the coffee, it is necessary to stir the coffee, but stirring simply causes the coffee to contact the air. Then, in the present embodiment, as shown in Fig. 2, the lower end of the guide tube 71 is formed in a shape of circular arc (or spiral). Accordingly, the coffee is allowed to flow in while eddying and swirling in the pot body 61. The lower end of the guide tube 71 is placed in the vicinity of the bottom surface of the pot body 61, and a head drop through which the coffee reaches the bottom surface is small, so that the coffee is allowed to avoid quality degradation caused by coffee dropping as is the case with the conventional system shown in Fig. 9. The coffee is supplied at near the bottom of the pot body 61, and the uppermost surface of the coffee, as shown in Fig. 2, smoothly moves upwards.

Because of the configuration, the area where the coffee in the pot body 61 contacts the air is only the uppermost surface thereof, and accordingly the coffee scarcely mixes with the atmosphere. Further, the coffee flows, eddying and swirling in the pot body 61, and the extracted coffee mixes with the existing coffee, and thereby the concentration of the coffee can become uniform.

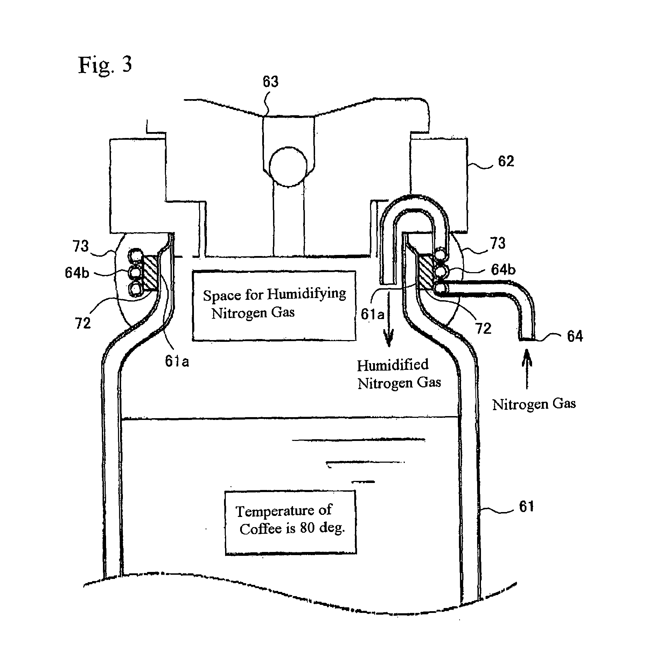

In Figs. 1 and 2, details of a neck portion 61a of the pot body 61 are omitted. Fig. 3 is an enlarged view of the neck portion 61a of the pot body 61. A heater 72 is provided on an outer circumferential surface of the neck portion 61a of the pot body 61. Then, the nitrogen gas introductory part 64 is wound around several times (three times in Fig. 3) on a surface of the heater 72 to form a winding part 64b. Then, a heat insulating material 73 is provided to cover the heater 72 and the winding part 64b. In addition, the winding part 64b forms a heat absorbing part.

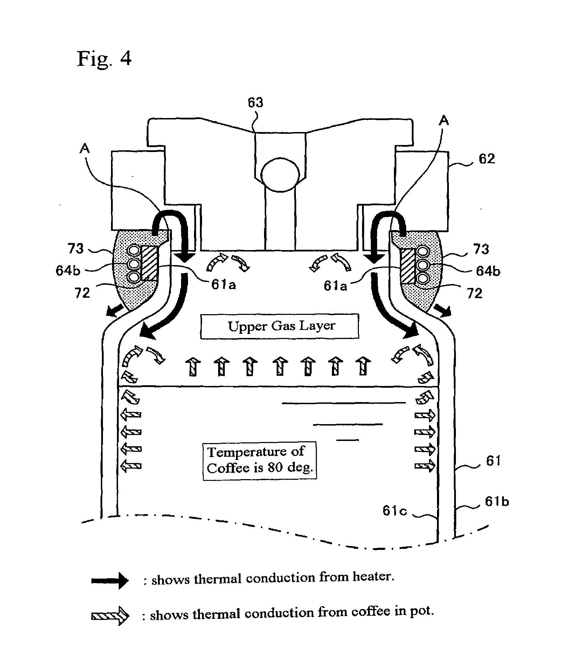

Fig. 4 is an enlarged view of the neck portion 61a of the pot body 61 and shows thermal conduction in the pot. The pot body 61 has a vacuum structure, and the vacuum structure cuts off thermal conduction between the outside and inside of the pot body 61. External metal 61b and internal metal 61c are joined to each other at the uppermost portion of the pot body 61 to form the vacuum structure of the pot body 61. The join is performed, for example, by welding. The welding is performed in an extremely accurate manner, and a thickness at a joining point A in Fig. 4 is about 0.1 mm. However, because the metal has a high thermal conductivity, thermal conduction is generated at the small joining point A, and heat inside the pot body 61 will escape outside. As described above, the joining portion between the external metal 61b and internal metal 61c forms a flow path of heat, which provides a factor for lowering the temperature of the coffee, even if the pot body 61 has the vacuum area. Then, in the present embodiment, to prevent the heat of the coffee from escaping through the joining point A, the heater 72 is provided in the neck portion 61a of the pot body 61.

As shown in Fig. 4, arrows with slant lines show the thermal conduction in the pot body 61. The heat of the coffee, as shown by the arrows with slant lines, will escape through the internal metal 61c of the pot body 61 and the uppermost surface of the coffee. Remaining in such a situation, the heat of the coffee will escape from the joining portion A to the external metal 61b by thermal conduction through the internal metal 61c of the pot body 61. However, in the present embodiment, the heater 72 supplies heat as shown by black arrows. Accordingly, even if the heat inside the pot body 61 escapes outside due to the thermal conduction at the joining point A, an amount of heat exceeding that of the escaped heat is supplied by the heater, and as the result, a flow path of heat at the joining portion A can be blocked.

It is important to create no temperature difference between the external metal 61b and internal metal 61c of the pot body 61 in order to block the flow path of heat at the joining portion A. Specifically, the temperature of the coffee stored in the pot body 61 is about 80°C, and in the present embodiment, the heater 72 heats at the temperature of about 80°C. That is, the heater 72 is not intended to keep the coffee warm or heat it, and the heater 72 is provided to cut off the thermal conduction due to the temperature difference between the inside and outside of the pot body 61.

Further, in the present embodiment, the heater 72 provided on the outer circumferential surface of the neck portion 61a of the pot body 61 heats the nitrogen gas supplied from the nitrogen gas generation unit, and the nitrogen gas then is introduced into the pot body 61. The temperature of the nitrogen gas to be introduced into the pot body 61 is also set to about 80°C. This is also based on eliminating a temperature difference between the nitrogen gas and the coffee to cut off the thermal conduction. When the nitrogen gas having an atmospheric temperature is used as in the conventional art, the heat of the coffee is consumed to warm the nitrogen gas, resulting in a lowered temperature of the coffee. In the present embodiment, making the temperature of the nitrogen gas approximately equal to that of the coffee cuts off the thermal conduction to prevent the temperature of the coffee from lowering.

As described above, the heater 72 allows the joining portion A of the pot body 61 and the nitrogen gas to have an approximately same temperature as that of the coffee, which can prevent a decrease in temperature of the coffee due to the thermal conduction. Further, the winding part 64b is composed of the nitrogen gas introductory part 64, which allows the nitrogen gas to sufficiently absorb heat from the heater 72. In addition, a mounting location of the heater 72, in the present embodiment, has been at the neck portion 61a of the pot body 61, but not limited to this, the mounting location may be provided in the cover part 62 as long as at least the pot body can be heated.

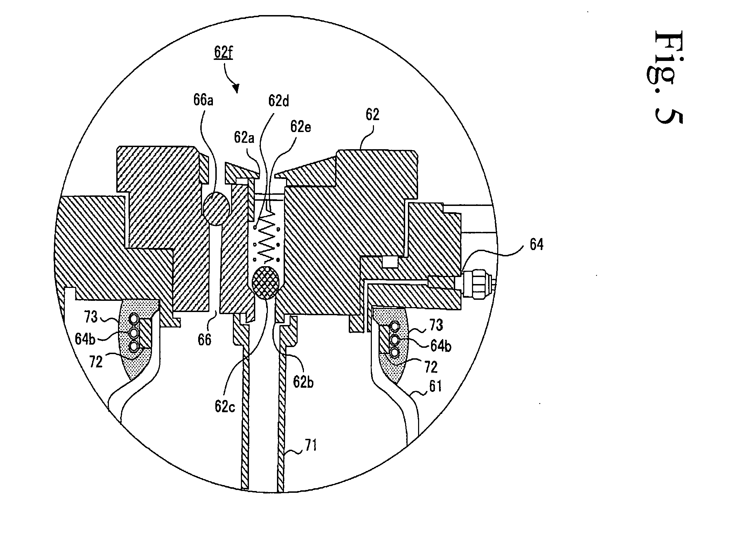

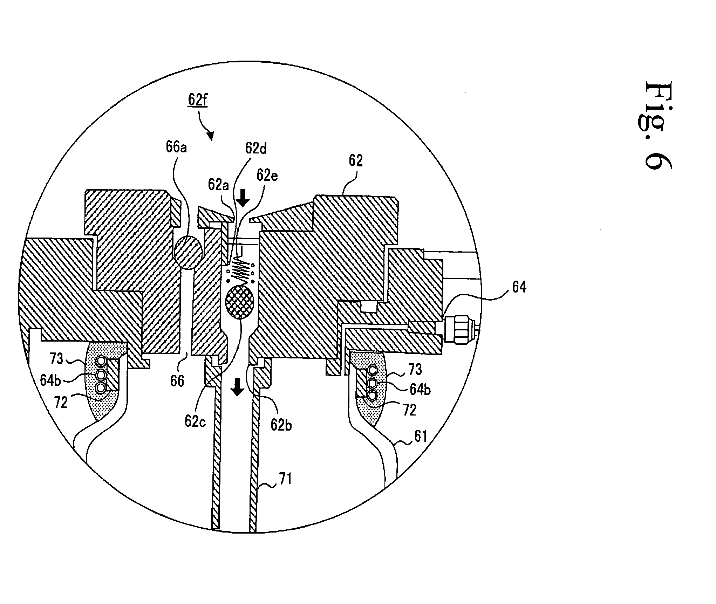

Figs. 5 and 6 are enlarged cross-section views of the cover part 62 of the pot 60. As shown in Figs. 5 and 6, the cover part 62 includes: an inflow port 62a for introducing the coffee; and an outlet port 62b for allowing the coffee having flowed in to flow out into the pot body 61. The outlet port 62b has the guide tube 71 connected thereto. Further, the cover part 62 has a check ball 62c as a valve plug, the check ball 62c serving as an on-off valve to close or open the outlet port 62b. Also, the cover part 62 has: a first spring 62d for applying force toward the outlet port 62b to the check ball 62c; and a second spring 62e made of shape memory alloy, for applying force toward the inflow port 62a to the check ball 62c when heated, and the check ball 62c, the first spring 62d and the second spring 62e constitute an operating device 62f.

In the operating device 62f, the first spring 62d, on standby, as shown in Fig. 5, applies force toward the outlet port 62b to the check ball 62c which force is larger than that of the second spring 62e. Accordingly, the check ball 62c closes the outlet port 62b, which does not permit undesired air to flow into the pot body 61 and the nitrogen gas filled up in the pot body 61 to flow out. As the result, it is possible to prevent the coffee stored in the pot body 61 from contacting the atmosphere.

On the one hand, when the coffee flows in, as shown in Fig. 6, the second spring 62e applies force toward the inflow port 62a to the check ball 62c which force is larger than that of the first spring 62d. That is, the second spring 62e made of shape memory alloy, upon receiving heat from the coffee, contracts to apply force to the check ball 62c and pulls up it which force is larger than that of the first spring 62d. Accordingly, the check ball 62c opens the outlet port 62b, allowing the coffee to flow in the pot body 61.

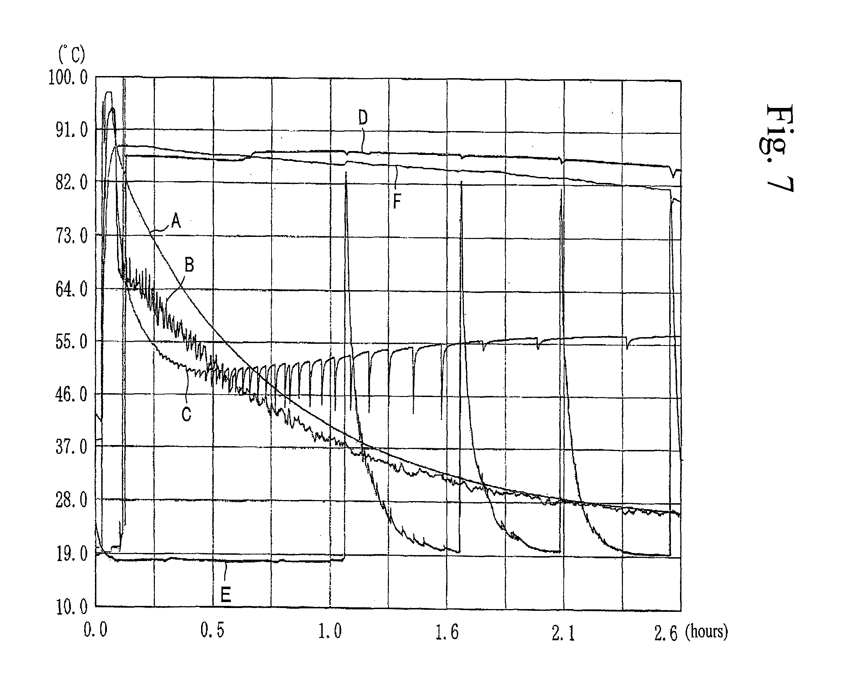

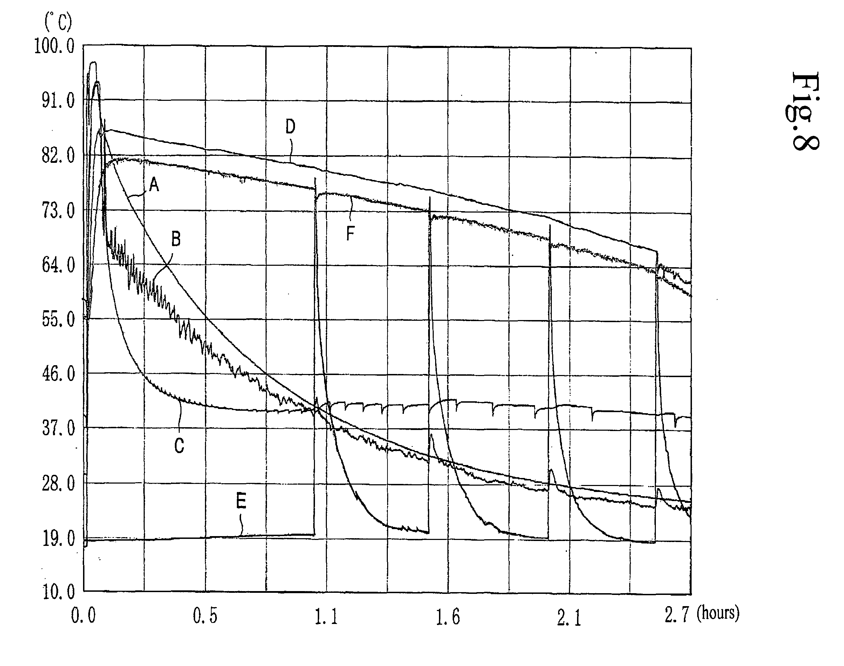

Figs. 7 and 8 show temperatures measured at multiple places of the pot with time. In Figs. 7 and 8, "A" shows a temperature change at the shower part 24 in Fig. 1, and "B" shows a temperature change of the coffee immediately after extraction in Fig. 1. Further, "C" shows a temperature change at the coffee introductory part 63, and "D" shows a temperature change of the nitrogen gas in the pot body 61. Also, "E" shows a temperature change at the outlet port 68, and "F" shows a temperature change of the coffee in the pot body. "E" has peaks seen at a certain interval, and it is because the coffee was taken out at a certain time interval. Further, Fig. 7 shows the temperature measurement result when the heater was provided at the neck portion of the pot body 61, and Fig. 8 shows the temperature measurement result without any heater.

In Figs. 7 and 8, "A" and "B" show an approximately same temperature change. Regarding "C", in Fig. 7, the temperature at the coffee introductory part 63 is higher than that in Fig. 8 because of the heater 72 provided in the neck portion of the pot body 61. The most remarkable differences between Figs. 7 and 8 are found in "D", "E" and "F". That is, as shown in Fig. 7, when the heater 72 is provided on the neck portion of the pot body 61, the temperature "D" of the nitrogen gas in the pot body 61 and the temperature "F" of the coffee are generally kept not lower than 82°C, but when no heater is provided, as shown in Fig. 8, the temperature "D" of the nitrogen gas in the pot body 61 and the temperature "F" of the coffee lower with time. Accordingly, also regarding the temperature "E" at the outlet port 68 shown in Fig. 7, its peak value is kept at a high value even after time elapses, but the peak value shown in Fig. 8 lowers gradually with time.

As described above, in the coffee machine according to the present embodiment, the heater 72 heats the pot body 61, and it is possible to cut off the thermal conduction caused by the temperature difference between the inside and outside of the pot body 61. That is, the pot body 61 has the vacuum structure, and the vacuum structure, accordingly, cuts off the thermal conduction between the outside and inside of the pot body. To form the vacuum structure of the pot body 61, the external metal 61b and the internal metal 61c are joined together at the uppermost portion of the pot body 61. This join is performed, for example, by welding. The welding is performed in an extremely accurate manner, and the thickness of the joining point A is about 0.1 mm. However, the metal has a high thermal conductivity, resulting in thermal conduction at this small joining point A, and the heat inside the pot body 61 accordingly will escape outside. As described above, the joining portion between the external metal 61b and the internal metal 61c provides a flow path of heat, which constitutes a factor for lowering the temperature of the coffee, even if the pot body 61 has the vacuum area. To cut off the flow path of heat in the joining portion A described above, it is necessary to produce no temperature difference between the external metal 61b and the internal metal 61c of the pot body 61. For the purpose, in the present invention, the pot body 61 has the heater 72 provided thereon. Accordingly, it becomes possible to prevent the heat of the coffee from escaping through the joining point A. Further, in the present invention, the nitrogen gas is supplied to the pot 60, and thereby the coffee in the pot 60 can be prevented from contacting the atmosphere.

### DESCRIPTION OF SYMBOLS

- 10: coffee machine body
- 15: heating vacuum pot
- 23: coffee dripper
- 24: shower part
- 30: nitrogen gas generation unit
- 31: nitrogen gas supplying part
- 60: pot
- 61: pot body
- 61a: neck portion
- 61b: external metal
- 61c: internal metal
- 62: cover part
- 62a: inflow port
- 62b: outlet port
- 62c: check ball (valve plug)
- 62d: first spring
- 62e: second spring
- 62f: operating device
- 63: coffee introductory part
- 63a: valve
- 64: nitrogen gas introductory part
- 64a: valve
- 64b: winding part (heat absorbing part)
- 65: nitrogen gas discharging part
- 66a: valve
- 67: nitrogen gas heater
- 68: outlet port
- 69: pump
- 70: coffee introductory part
- 70a: valve
- 71: guide tube
- 72: heater
- 100: coffee machine

## Claims

1. A coffee machine comprising a coffee machine body for spraying hot water over powder of coffee beans to extract coffee, and a pot for storing the extracted coffee, wherein
the coffee machine body comprises:
a nitrogen gas generation unit for generating nitrogen gas, and
a nitrogen gas supplying part for supplying the nitrogen gas generated by the nitrogen gas generation unit into the pot, and
the pot comprises:
a pot body having a vacuum area for cutting off thermal conduction,
a cover part for sealing up the pot body, and
a heater provided in at least one of the pot body and the cover part, for heating at least the pot body.

2. The coffee machine according to claim 1, wherein
the nitrogen gas supplying part comprises:
a heat absorbing part for allowing the nitrogen gas to absorb heat from the heater, and
a nitrogen gas introductory part for introducing the nitrogen gas having absorbed heat into the pot body.

3. The coffee machine according to claim 2, wherein
the heater is provided on an outer circumferential surface of a neck portion of the pot body, and
the heat absorbing part abuts on the heater on an outer surface of the heater.

4. The coffee machine according to any one of claims 1 to 3, wherein
the cover part comprises:
an inflow port for allowing the coffee to flow in,
an outlet port for allowing the coffee having flowed in to flow out into the pot body, and
a guide tube whose one end is formed in a shape of circular arc or spiral, while whose the other end is connected to the outlet port, for guiding the coffee having flowed in through the inflow port to a bottom surface in the pot body.

5. The coffee machine according to claim 4, wherein
the cover part further has an operating device comprising:
a valve plug for closing or opening the outlet port,
a first spring for applying force toward the outlet port to the valve plug, and
a second spring made of shape memory alloy, for applying force toward the inflow port to the valve plug when heated, wherein
on standby, the first spring applies force toward the outlet port to the valve plug which force is larger than that of the second spring, and
while the second spring applies force toward the inflow port to the valve plug which force is larger than that of the first spring when the coffee flows in.

6. The coffee machine according to any one of claims 1 to 6, wherein
the coffee machine body comprises:
a heating vacuum pot having a heater and a vacuum area for cutting off thermal conduction, for storing hot water used for extracting the coffee,
